# FASCICULE DE BREVET EUROPEEN

(11) **EP 0 721 858 B1**
(45) Date de publication et mention de la délivrance du brevet: **29.07.1998**
(21) Numéro de dépôt: 96400021.0
(22) Date de dépôt: 04.01.1996
(51) Int. Cl.: B60R 7/04

(54) **Dispositif de rangement d'objets, notamment dans un véhicule automobile**
Lagervorrichtung für Gegenstände, insbesondere in einem Fahrzeug
Storing device for articles, especially in a motor vehicle

(30) Priorité: 10.01.1995 FR 9500217
(43) Date de publication de la demande: 17.07.1996
(73) Titulaire: ECIA - EQUIPEMENTS ET COMPOSANTS POUR L'INDUSTRIE AUTOMOBILE, F-25400 Audincourt (FR)
(72) Inventeur: Ropital, Jean-François, Exincourt, F-25400 Audincourt (FR)
(74) Mandataire: Habasque, Etienne Joel Jean-François

(56) Documents cités:
- EP-A- 0 546 668
- DE-A- 3 432 739
- DE-U- 8 624 160
- US-A- 3 503 648

## Description

La présente invention concerne un dispositif de rangement d'objets, notamment dans un véhicule automobile.

On connaît déjà dans l'état de la technique, un certain nombre de dispositifs de rangement d'objets dans les véhicules automobiles, qui comportent un logement prévu dans une pièce d'équipement du véhicule, telle que par exemple la planche de bord de celui-ci, et adapté pour recevoir un tiroir de rangement des objets, déplaçable par exemple par un utilisateur entre une position escamotée dans le logement et une position en saillie hors de celui-ci.

En règle générale, le tiroir est monté déplaçable à coulissement dans le logement correspondant de la pièce d'équipement et les parois latérales de ce tiroir et les parois correspondantes de la pièce d'équipement délimitant le logement, comportent des parties en saillie et des pistes complémentaires de guidage de ces déplacements du tiroir dans le logement, le long de l'axe de celui-ci.

On conçoit cependant que ces dispositifs présentent un certain nombre d'inconvénients notamment au niveau de l'accessibilité au tiroir et notamment aux objets disposés au fond de celui-ci.

Différentes solutions ont été proposées pour améliorer l'accessibilité au tiroir (voir par exemple le document EP-A-0 546 668) mais se sont traduites par des structures relativement complexes.

Le but de l'invention est donc de résoudre ces problèmes.

A cet effet, l'invention a pour objet un dispositif de rangement d'objets, notamment dans un véhicule automobile, du type comportant un logement prévu dans une pièce d'équipement du véhicule et adapté pour recevoir un tiroir de rangement des objets, déplaçable entre une position escamotée dans le logement et une position en saillie hors de celui-ci, les parois latérales du tiroir et les parois correspondantes de la pièce d'équipement délimitant le logement, comportant des moyens à parties en saillie et à pistes complémentaires de guidage des déplacements du tiroir dans le logement, caractérisé en ce que les pistes comprennent au moins deux portions inclinées l'une par rapport à l'autre, permettant l'une, par déplacement relatif avec la partie en saillie correspondante, un déplacement à coulissement du tiroir dans le logement, parallèle à l'axe de celui-ci, vers et depuis sa position escamotée, et l'autre, par déplacement relatif avec ladite partie en saillie correspondante, un basculement du tiroir par rapport à l'axe du logement, vers et depuis sa position en saillie hors du logement.

Avantageusement, la paroi de fond du tiroir comporte un renfoncement adapté pour venir en appui sur une surface de butée de la pièce d'équipement, en position basculée en saillie hors du logement, de ce tiroir.

L'invention sera mieux comprise à la lecture de la description qui va suivre, donnée uniquement à titre d'exemple et faite en se référant aux dessins annexés, sur lesquels :
- les Figs. 1 et 2 représentent des vues en perspective d'un dispositif de rangement d'objets selon l'invention, dans lesquelles le tiroir est représenté respectivement en position escamotée et en position en saillie hors du logement; et
- les Figs. 3 et 4 représentent des vues en coupe de ce dispositif de rangement illustrant le fonctionnement de celui-ci.

Ainsi qu'on peut le voir sur ces figures, un dispositif de rangement d'objets selon l'invention est adapté pour être intégré par exemple dans une pièce d'équipement d'un véhicule automobile, telle que la planche de bord de celui-ci, cette pièce d'équipement étant désignée par la référence générale 1 sur ces figures.

Cette pièce d'équipement comporte alors un logement 2 adapté pour recevoir un tiroir 3 de rangement des objets.

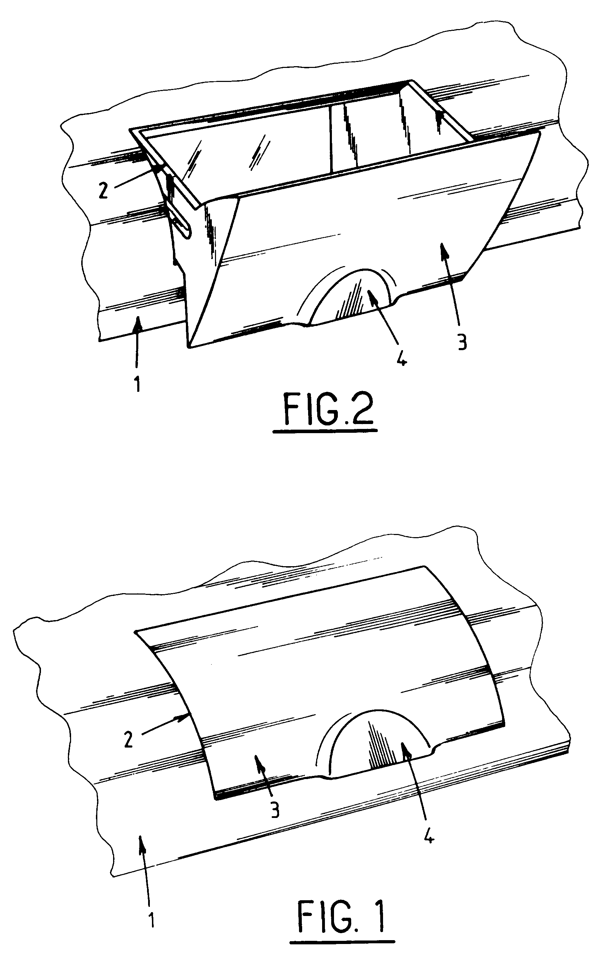

Ce tiroir 3 comporte par exemple des moyens de manipulation par un utilisateur, désignés par la référence générale 4 et constitués par exemple par une poignée permettant à cet utilisateur de déplacer ce tiroir entre une position escamotée dans le logement, illustrée sur la figure 1 et une position en saillie hors de celui-ci, illustrée sur la figure 2.

De manière classique, les parois latérales du tiroir et les parois correspondantes de la pièce d'équipement délimitant le logement, comportent des moyens à parties en saillie et à pistes complémentaires de guidage des déplacements du tiroir dans le logement.

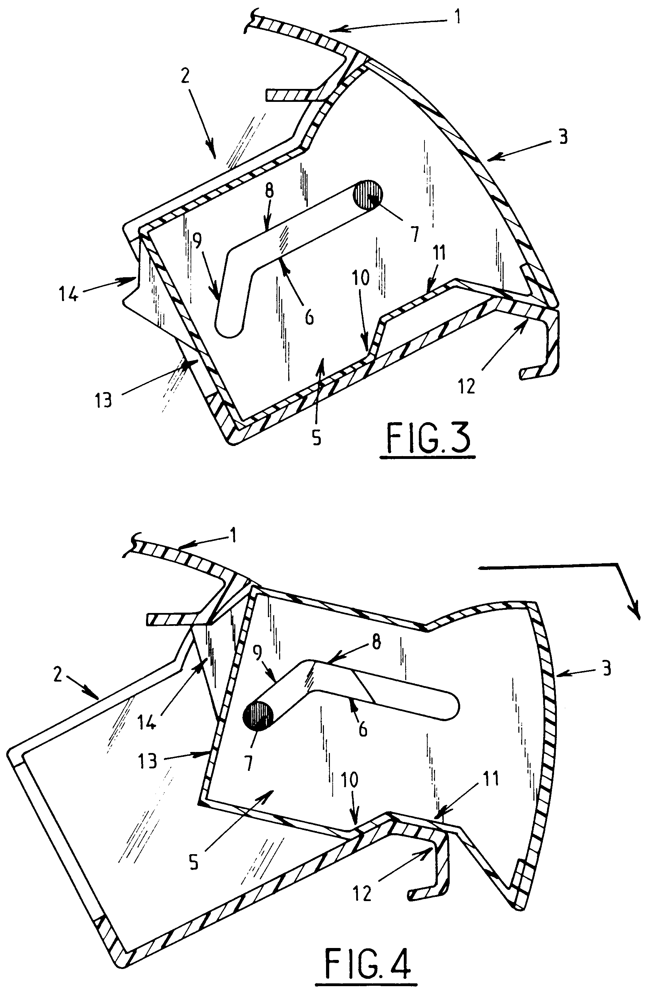

C'est ainsi par exemple comme on peut le voir sur les figures 3 et 4, que la paroi latérale 5 du tiroir 3 peut comporter une piste de guidage 6 qui se présente par exemple sous la forme d'une lumière de celle-ci, adaptée pour coopérer avec une partie en saillie complémentaire 7 formée par exemple par un téton de la paroi latérale correspondante de la pièce d'équipement, délimitant le logement.

L'inverse peut également être envisagé.

Selon l'invention, les pistes de guidage, par exemple 6, comprennent au moins deux portions inclinées l'une par rapport à l'autre et désignées par exemple par les références 8 et 9 sur les figures 3 et 4 pour cette piste 6, permettant l'une 8, un déplacement à coulissement du tiroir dans le logement, parallèle à l'axe de celui-ci, vers et depuis sa position escamotée et l'autre 9, un basculement du tiroir par rapport à l'axe du logement, vers et depuis sa position en saillie hors du logement.

On conçoit en effet au vu de ces figures, que lorsque l'utilisateur souhaite déplacer le tiroir de sa position escamotée dans le logement vers sa position en saillie hors du logement, il commence par déplacer celui-ci à coulissement dans le logement, le long de l'axe de celui-ci.

Lors de cette première phase de déplacement du tiroir, la portion 8 de la piste 6 se déplace autour du téton 7.

Lors d'une seconde phase de déplacement de ce tiroir, celui-ci peut basculer vers sa position en saillie hors du logement et au cours de cette seconde phase de déplacement, c'est la portion 9 de la piste 6, inclinée par rapport à la portion 8 de celle-ci, qui se déplace autour du téton 7 comme cela est illustré sur la figure 4.

Ainsi que cela est représenté sur ces figures, la paroi de fond du tiroir, désignée par la référence 10, comporte avantageusement un renfoncement 11 adapté pour venir en appui sur une surface de butée 12 de la pièce d'équipement, en position basculée en saillie hors du logement, du tiroir, pour délimiter cette position basculée.

La paroi arrière du tiroir 3, désignée par la référence 13, peut également comporter des moyens de butée 14 adaptés pour coopérer avec une surface de butée complémentaire de la pièce d'équipement 1 du véhicule, pour éviter toute dégradation des moyens de guidage et tout dégagement accidentel du tiroir, du logement.

Lorsque l'utilisateur souhaite à nouveau escamoter le tiroir à l'intérieur du logement correspondant de la pièce d'équipement, il déplace celui-ci dans un premier temps, par basculement, pour le ramener dans l'axe du logement, la portion 9 de la piste 6 se déplaçant autour du téton 7, puis, lorsque le tiroir est dans l'axe de ce logement, l'utilisateur n'a plus qu'à pousser celui-ci pour l'escamoter dans le logement, la portion 8 de la piste 6 se déplaçant autour du téton 7.

On conçoit alors que cette structure présente un certain nombre d'avantages dans la mesure où elle permet d'améliorer l'accès aux objets disposés dans le tiroir et en particulier au fond de celui-ci, tout en facilitant le rangement d'objets encombrants dans le tiroir, par un dégagement plus important de celui-ci, du logement correspondant de la pièce d'équipement.

Il va de soi bien entendu que différents modes de réalisation de ce dispositif peuvent être envisagés et que des parties en saillie et des pistes de guidage complémentaires différentes de celles décrites peuvent être utilisées pour assurer le guidage des déplacements du tiroir dans le logement.

Il va de soi également que des pièces d'équipement du véhicule, autres que la planche de bord de celui-ci, telles que par exemple les portières, les accoudoirs de siège, etc.., peuvent être équipées d'un tel dispositif.

Les pistes de guidage peuvent également être munies par exemple d'une troisième portion s 'étendant à partir de la seconde portion 9 de celles-ci, par exemple à peu près parallèlement à la première 8, pour permettre par exemple un dégagement encore plus important du tiroir, cette troisième portion débouchant par exemple au niveau de la paroi arrière 13 du tiroir, pour permettre un dégagement complet du tiroir, du logement de la pièce d'équipement.

## Revendications

1. Dispositif de rangement d'objets, notamment dans un véhicule automobile, du type comportant un logement (2) prévu dans une pièce d'équipement (1) du véhicule et adapté pour recevoir un tiroir (3) de rangement des objets, déplaçable entre une position escamotée dans le logement et une position en saillie hors de celui-ci, les parois latérales (5) du tiroir (3) et les parois correspondantes de la pièce d'équipement (1) délimitant le logement, comportant des moyens (6,7) à parties en saillie (7) et à pistes complémentaires (6) de guidage des déplacements du tiroir dans le logement, caractérisé en ce que les pistes comprennent au moins deux portions inclinées l'une par rapport à l'autre (8,9), permettant l'une (8), par déplacement relatif avec la partie en saillie (7) correspondante, un déplacement à coulissement du tiroir (3) dans le logement (2), parallèle à l'axe de celui-ci, vers et depuis sa position escamotée, et l'autre (9), par déplacement relatif avec ladite partie en saillie (7) correspondante, un basculement du tiroir (3) par rapport à l'axe du logement (2), vers et depuis sa position en saillie hors du logement.

2. Dispositif selon la revendication 1, caractérisé en ce que la paroi de fond (10) du tiroir (3) comporte un renfoncement (11) adapté pour venir en appui sur une surface de butée (12) de la pièce d'équipement (1) en position basculée en saillie hors du logement de ce tiroir.

3. Dispositif selon la revendication 1 ou 2, caractérisé en ce que les pistes (6) sont formées par des lumières (6) des parois latérales (5) du tiroir (3) tandis que les parties en saillie (7) sont formées par des tétons (7) des parois correspondantes de la pièce d'équipement, délimitant le logement.

## Claims

1. Device for storing objects, particularly in a motor vehicle, of the type comprising a housing (2) provided in a piece of equipment (1) of the vehicle and adapted to receive a drawer (3) for storing objects, displaceable between a retracted position in the housing and a position protruding from the latter, the side walls (5) of the drawer (3) and the corresponding walls of the piece of equipment (1) delimiting the housing, comprising means (6, 7) with protruding parts (7) and complementary tracks (6) for guiding the displacements of the drawer in the housing, characterised in that the tracks comprise at least two portions inclined with respect to one another (8, 9), one of them (8) allowing, by displacement relative to the corresponding protruding part (7), a sliding displacement of the drawer (3) in the housing (2), parallel with the axis of the latter, to and from its retracted position, and the other (9), by relative displacement with respect to the corresponding protruding part (7), allowing a pivoting of the drawer (3) with respect to the axis of the housing (2), to and from its position protruding out of the housing.

2. Device according to Claim 1, characterised in that the bottom panel (10) of the drawer (3) comprises a reinforcement (11) adapted to come to bear on a stop surface (12) of the piece of equipment (1) in the pivoted position protruding out of the housing of this drawer.

3. Device according to Claim 1 or 2, characterised in that the tracks (6) are formed by openings (6) in the side walls (5) of the drawer (3) whilst the protruding parts (7) are formed by studs (7) in the corresponding walls of the piece of equipment, delimiting the housing.

## Patentansprüche

1. Ablagevorrichtung für Gegenstände, insbesondere in einem Kraftfahrzeug, von einer Art, die eine Aufnahme (2) aufweist, die in einem Ausrüstungsteil (1) des Fahrzeugs vorgesehen und an die Aufnahme eines Ablageschubfachs (3) angepaßt ist, das zwischen einer in der Aufnahme versenkten Stellung und einer herausgefahrenen Stellung bewegt werden kann, wobei die Seitenwände (5) des Schubfachs (3) und die entsprechenden die Aufnahme begrenzenden Wände des Ausrüstungsteils (1) Mittel (6, 7) mit hervorstehenden Teilen (7) und zusätzlichen Führungsbahnen (6) für die Bewegungen des Schubfachs in der Aufnahme aufweisen, dadurch gekennzeichnet, daß die Bahnen mindestens zwei gegeneinander schräggestellte Abschnitte (8, 9) aufweisen, wobei der eine (8) durch eine relative Bewegung mit dem entsprechenden hervorstehenden Teil (7) eine Schiebebewegung des Schubfachs (3) in der Aufnahme (2) parallel zu deren Achse in die versenkte Stellung und ab ihr, und der andere (9) durch eine relative Bewegung mit dem entsprechenden hervorstehenden Teil (7) eine Kippbewegung des Schubfachs (3) gegenüber der Achse der Aufnahme (2) in die aus der Aufnahme herausgefahrene Stellung und ab ihr ermöglicht.

2. Vorrichtung gemäß Anspruch 1, dadurch gekennzeichnet, daß die Bodenwand (10) des Schubfachs (3) eine Vertiefung (11) aufweist, die ausgeformt ist, in der außerhalb der Aufnahme gekippten Stellung des Schubfachs an einer Anschlagfläche (12) des Ausrüstungsteils (1) zur Anlage zu kommen.

3. Vorrichtung gemäß Anspruch 1 oder 2, dadurch gekennzeichnet, daß die Bahnen (6) aus Schlitzen (6) in den Seitenwänden (5) des Schubfachs (3) bestehen, während die hervorstehenden Teile (7) aus Ansätzen (7) an den entsprechenden die Aufnahme begrenzenden Wänden des Ausrüstungsteils bestehen.
